# FASCICULE DE BREVET EUROPEEN

(11) **EP 3 991 356 B1**
(45) Date de publication et mention de la délivrance du brevet: **16.04.2025**
(21) Numéro de dépôt: 20730663.0
(22) Date de dépôt: 10.06.2020
(51) Int. Cl.: H04L 41/5051

(54) **PROCÉDÉ D'ALLOCATION DE RESSOURCES D'UNE INFRASTRUCTURE DE RÉSEAU**
VERFAHREN ZUR ZUWEISUNG VON RESSOURCEN EINER NETZWERKINFRASTRUKTUR
METHOD FOR ALLOCATING RESOURCES OF A NETWORK INFRASTRUCTURE

(30) Priorité: 28.06.2019 FR 1907172
(43) Date de publication de la demande: 04.05.2022
(73) Titulaire: Orange, 92130 Issy-les-Moulineaux (FR)
(72) Inventeur: FROMENTOUX, Gaël, 92326 CHÂTILLON CEDEX (FR); FIEAU, Frédéric, 92326 CHATILLON CEDEX (FR); STEPHAN, Emile, 92326 CHATILLON CEDEX (FR)
(74) Mandataire: Plasseraud IP
(86) Numéro de dépôt international: PCT/EP2020/066116
(87) Numéro de publication internationale: WO 2020/260025

(56) Documents cités:
- US-A1- 2016 380 832
- US-A1- 2018 063 000
- US-A1- 2018 191 637

## Description

### Domaine technique

La divulgation se situe dans le domaine des réseaux de télécommunication mis en œuvre à partir d'architectures virtualisées. La divulgation vise à améliorer l'instanciation de fonctions virtualisées dans une infrastructure de serveurs, ladite infrastructure de serveurs partageant des ressources réseau.

### Technique antérieure

Le secteur des télécommunications est au cœur d'une transformation numérique qui s'appuie sur des technologies émergentes telles que la virtualisation des fonctions réseau consistant à découpler les fonctions réseau des équipements physiques dédiés pour déployer les fonctions réseau dans des espaces de stockage.

Une fonction de réseau virtualisée est considérée comme un ensemble de composants logiciels (VNF - « Virtual Network Functions » en anglais), dont chaque composant doit être exécuté sur un serveur tel qu'une machine virtuelle au sein de l'architecture dite virtualisée. Le déploiement d'un service réseau établi à partir de VNFs consiste donc à instancier les différents composants des VNFs dans des machines virtuelles ayant les ressources nécessaires pour l'exécution des VNFs et donc pour la bonne mise en œuvre du service. Ces ressources, que ce soient des ressources de calcul, de stockage, de mémoire et de ressources réseau, sont fournies par l'infrastructure hébergeant ces machines virtuelles.

Le déploiement des services réseau, à destination de clients de l'opérateur d'un réseau de télécommunications ou pour l'opérateur lui-même, implique par conséquent l'instanciation des fonctions virtualisées dans des machines virtuelles.

Certaines fonctions réseau présentent de fortes contraintes en termes de latence et doivent par conséquent être déployées au plus près de l'utilisateur. Dans certains cas, ces contraintes incitent les opérateurs de télécommunications à revoir leurs infrastructures pour répondre à ces exigences, en distribuant massivement leurs centres de données pour être présents dans des sites positionnés en bordure de réseau (communément appelé « edge computing » en anglais).

Cette distribution des fonctions réseau permet de proposer une qualité de service améliorée pour les utilisateurs finaux ainsi que pour les entreprises clientes et de répondre aux exigences strictes de certaines fonctions réseau. Ces centres de données distribués en bordure du réseau ont des capacités limitées en termes de ressources, notamment au regard des grands centres de données déployés par les principaux acteurs du domaine.

L'écosystème des fonctions virtualisées nécessite de nouvelles techniques de gestion et d'orchestration pour atteindre les performances requises.

L'orchestration vise à automatiser l'organisation, la coordination, et la gestion de systèmes informatiques complexes, notamment lorsque lesdits systèmes informatiques sont virtualisés. L'orchestration est impliquée lorsque les choses doivent se dérouler dans un certain ordre. L'orchestrateur Kubernetes est largement déployé à grande échelle et utilisé à la fois dans les environnements de test et de production.

L'instanciation des VNFs repose, selon l'art antérieur, sur une allocation de serveurs par un orchestrateur de ressources. Néanmoins, les orchestrateurs de l'art antérieur peuvent allouer des serveurs satisfaisant certains critères (telles que la puissance de calcul global ou telles que la capacité de stockage) mais ces derniers ne peuvent vérifier que les serveurs alloués peuvent communiquer entre eux de manière satisfaisante ou encore ne peuvent garantir une qualité de service réseau entre ces serveurs.

Des exemples et modes de réalisation selon l'art antérieur peuvent être trouvés dans US 2016/380832 A1.

La présente divulgation a pour objet d'apporter des améliorations par rapport à l'état de la technique.

### Résumé

La divulgation propose un procédé d'allocation de ressources d'une infrastructure réseau d'un opérateur pour la fourniture d'un service de télécommunication.

Le procédé comprend :
- réception, par un orchestrateur de ressources, d'une requête d'instanciation de fonctions virtualisées sur des serveurs de l'infrastructure réseau ;
- détermination de serveurs à allouer et de ressources de l'infrastructure réseau permettant la connectivité entre lesdits serveurs en fonction de la requête d'instanciation desdites fonctions virtualisées ;
- émission à destination des ressources déterminées de l'infrastructure réseau d'une demande de configuration permettant la connectivité entre lesdits serveurs déterminés ;
- émission à destination des serveurs déterminés d'une demande d'allocation de moyens informatiques sur lesdits serveurs déterminés.

Ainsi, il est possible d'assurer une connectivité entre les serveurs alloués par l'orchestrateur, par exemple. Cette connectivité répond ainsi à l'exigence formulée dans la requête d'instanciation.

Un serveur peut être un dispositif informatique physique (ex. ordinateur) ou un logiciel, comme par exemple un conteneur, une machine virtuelle, un système d'exploitation, une application ou un pod.

Une requête d'instanciation peut être, par exemple, une requête d'un utilisateur (ou d'un serveur client ou d'un OSS/BSS - « Operational Support System » et « Business Support System » en anglais) indiquant une exigence client comme le souhait d'allouer des ressources permettant un calcul distribué de plusieurs Mega Flops ou permettant d'agir comme un serveur web pouvant répondre à des centaines de requêtes simultanées.

La connectivité peut être l'existence d'un lien réseau, la disponibilité d'un lien réseau, la disponibilité d'une bande passante sur un lien réseau, la latence d'un lien réseau, etc.

La demande de configuration à destination des ressources déterminées de l'infrastructure réseau permet ainsi de configurer ces ressources pour s'assurer que l'exigence formulée dans la requête d'instanciation reste respectée dans le temps. Par exemple, il est possible de configurer un routeur réseau pour réserver une bande passante entre deux serveurs de manière fixe ou pour assurer une qualité de service donnée entre les deux serveurs. Il est également possible de configurer certains pare-feu pour assurer une sécurité entre deux serveurs (comme la réservation ou la configuration d'un VLAN).

La demande d'allocation de moyens informatiques sur lesdits serveurs déterminés peut prendre la forme d'une requête de réservation de capacité sur des serveurs.

Un orchestrateur de ressources permet d'allouer des ressources pour obtenir un état global des serveurs avant d'instancier des fonctions virtualisées sur des machines virtuelles.

Dans un mode de réalisation, le procédé peut comprendre en outre l'émission d'une demande de configuration à destination d'un gestionnaire de ressources de l'infrastructure réseau. L'émission à destination des ressources déterminées de l'infrastructure réseau d'une demande de configuration peut être fonction de ladite demande de configuration à destination d'un gestionnaire de ressources de l'infrastructure réseau.

Ainsi le gestionnaire de ressources peut réserver des ressources dans le réseau pour établir une connectivité entre les serveurs, comme, par exemple, des liens réseau ou une bande passante. Par conséquent, il est possible d'assurer une connectivité entre les serveurs alloués et également entre les serveurs alloués et les clients finaux.

Dans un autre mode de réalisation, la détermination de serveurs à allouer et de ressources de l'infrastructure réseau permettant la connectivité entre lesdits serveurs en fonction de la requête d'instanciation desdites fonctions virtualisées peut comprendre, dans l'ordre :
- détermination de serveurs à allouer et
- détermination de ressources de l'infrastructure réseau permettant la connectivité entre lesdits serveurs déterminés en fonction de la requête d'instanciation desdites fonctions virtualisées.

Après la configuration du réseau par le gestionnaire de ressources, l'orchestrateur peut allouer des serveurs dans le réseau. Les serveurs à allouer peuvent être par exemple des terminaux utilisateurs ou des serveurs qui disposent d'une puissance de calcul et une capacité de stockage suffisante, qui sont géographiquement proches, etc. Les ressources de l'infrastructure sont configurées pour permettre une connexion entre les serveurs. Les ressources peuvent donc être des routeurs, des commutateurs, etc. et sont déterminées en fonction des serveurs sélectionnés.

La détermination de serveurs à allouer et de ressources de l'infrastructure réseau permettant la connectivité entre lesdits serveurs en fonction de la requête d'instanciation desdites fonctions virtualisées peut comprendre, dans l'ordre :
- réception d'un état de l'infrastructure réseau par l'orchestrateur de ressources ;
- détermination de serveurs à allouer en fonction de l'état de l'infrastructure réseau reçue, l'état de l'infrastructure réseau permettant la connectivité entre lesdits serveurs en fonction de la requête d'instanciation desdites fonctions virtualisées, et
- détermination de ressources de l'infrastructure réseau permettant ladite connectivité.

L'état de l'infrastructure reçu peut être une cartographie sommaire ou détaillée de l'infrastructure réseau et peut comprendre des indications géographiques basiques, l'existence d'un lien réseau, la disponibilité d'un lien réseau, la disponibilité d'une bande passante sur un lien réseau, etc. Les serveurs à allouer sont choisis en fonction de ces informations et prennent en compte l'état du réseau. Pour satisfaire par exemple à une exigence de latence du client, les serveurs (ex. serveur de calcul) et les ressources réseau (ex. routeur, pare-feu) seront alloués géographiquement proche du client ou des utilisateurs du service à mettre en œuvre.

Dans un mode de réalisation, au moins une des ressources déterminées de l'infrastructure réseau d'une demande de configuration peut être un pare-feu ou un routeur.

L'objectif des ressources déterminées de l'infrastructure réseau est d'établir une connexion entre les serveurs et d'assurer leur fonctionnement. Ainsi, les ressources peuvent être un routeur pour gérer la connexion entre les serveurs ou un pare-feu pour définir quels types de communications sont autorisés sur le réseau.

Au moins un des serveurs alloués peut être un serveur de calcul ou un serveur de stockage de données ou un terminal utilisateur.

Pour exécuter la demande du client, des serveurs avec une puissance de calcul et une capacité de stockage suffisants peuvent être requis.

L'état du réseau peut comprendre des informations relatives à la charge de liens réseau ou à la charge de puissance de calcul ou des informations de connectivité entre les serveurs.

Pour éviter des problèmes de surcharge des serveurs (ce qui peut par exemple ralentir les processus en cours), l'allocation de moyens informatiques sur des serveurs et des ressources peut être choisie en fonction de la charge de liens réseau ou de la charge de puissance de calcul. L'état du réseau peut donc comprendre des informations détaillées sur la charge de liens réseau (ex. débit de transmission) ou à la charge de puissance de calcul (ex. un routeur peut être en limite de capacité de traitement en termes de processeur) ou des informations de connectivité entre les serveurs (ex. quelle bande passante est disponible).

La requête d'instanciation peut comprendre une demande de disponibilité ou de puissance de calcul, de débit ou de latence.

Pour gérer la charge de travail, des serveurs disponibles et avec des propriétés satisfaisantes peuvent être requis. La requête d'instanciation peut donc demander des informations relatives à la puissance de calcul (ex. nombre de Flops), de débit (ex. nombre d'octets par seconde) ou de latence (ex. temps de réponse minimal).

La connectivité peut être une information de bande passante, de latence, de niveau de sécurité ou de qualité de service.

La qualité de la connectivité i.e. la communication entre les serveurs dépend de plusieurs paramètres comme la bande passante (ex. 3G ou 4G), et la latence. Selon le type de service envisagé, la qualité de service pourra résider dans le débit, le délai et/ou la disponibilité.

L'allocation de moyens informatiques sur des serveurs peut être faite selon les fonctions virtualisées à instancier.

Si la demande du client comprend le traitement des données près de la source (ex. pour un traitement informatique en « temps réel »), des serveurs peuvent être alloués à des endroits proches afin de diminuer la latence ou à des endroits plus éloignés si les temps de latence propres aux liens (qui peuvent dépendre de la technologie utilisée) sont plus faibles. Si la demande du client comprend une forte puissance de calcul, des serveurs avec de telles propriétés peuvent être choisies.

L'émission à destination des serveurs déterminés peut être faite suite à une demande d'allocation de moyens informatiques sur desdits serveurs déterminés.

Ainsi, l'orchestrateur de ressources peut déterminer des serveurs à allouer en fonction de l'état du réseau fourni par le gestionnaire de ressources et peut émettre par conséquent une demande à destination de ces serveurs.

Le procédé peut être exécuté en périphérie de réseau.

Ainsi, il est possible de diminuer les volumes de données qui transitent, le trafic qui en résulte, la distance parcourue (ex. pour réduire les coûts de transmission) ou la latence.

La présente divulgation vise également un dispositif (ex. un orchestrateur) adapté à mettre en œuvre le procédé décrit précédemment.

Ainsi, la présente divulgation vise un dispositif d'allocation de ressources d'une infrastructure de réseau pour l'instanciation de fonctions virtualisées sur des serveurs.
Le dispositif comprend :
- une interface pour la réception d'une requête d'instanciation desdites fonctions virtualisées par un orchestrateur de ressources
- un circuit adapté pour la détermination de serveurs à allouer et de ressources de l'infrastructure réseau permettant la connectivité entre lesdits serveurs en fonction de la requête d'instanciation desdites fonctions virtualisées ;
- une interface pour l'émission à destination des ressources déterminées de l'infrastructure réseau d'une demande de configuration permettant la connectivité entre lesdits serveurs déterminés
- une interface pour l'émission à destination des serveurs déterminés d'une demande d'allocation de moyens informatiques sur desdits serveurs déterminés.

La présente divulgation vise également un programme informatique comportant des instructions pour la mise en œuvre du procédé précédemment décrit, lorsque ce programme est exécuté par un processeur.

Ce programme peut utiliser n'importe quel langage de programmation (par exemple, un langage-objet ou autre), et être sous la forme d'un code source interprétable, d'un code partiellement compilé ou d'un code totalement compilé.

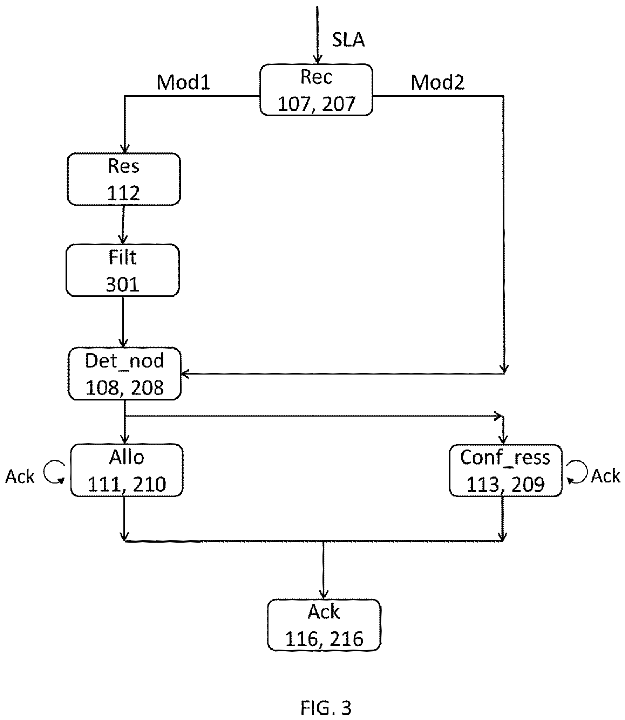

La figure 3 décrite en détail ci-après peut former l'organigramme de l'algorithme général d'un tel programme informatique.

Un autre aspect concerne un support de stockage non transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoires et à un module d'interface entrée/sortie, pour exécuter tout ou partie du procédé décrit ci-avant.

### Brève description des dessins

D'autres caractéristiques et avantages de la divulgation apparaîtront plus clairement à la lecture de la description suivante de modes de réalisation particuliers, donnés à titre de simples exemples illustratifs et non limitatifs, et des dessins annexés, parmi lesquels :
**Fig. 1**

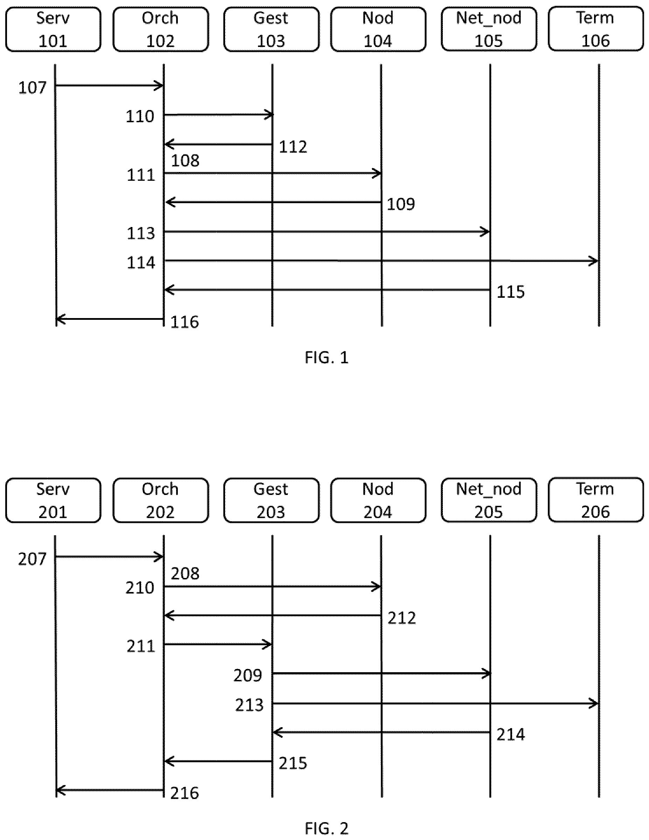

   [Fig. 1] présente un premier mode de réalisation.
**Fig. 2**
   [Fig. 2] présente un deuxième mode de réalisation.
**Fig. 3**
   [Fig. 3] présente un ordinogramme présentant le procédé d'allocation de ressources d'une infrastructure de réseau d'un opérateur pour l'instanciation de fonctions virtualisées sur des serveurs.
**Fig. 4**

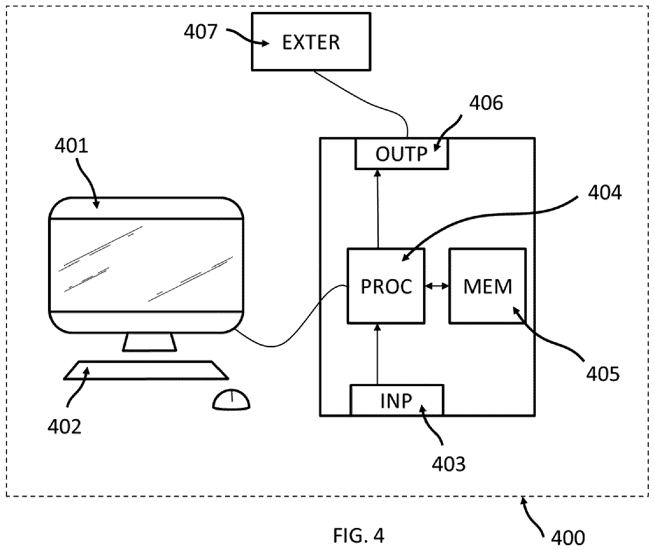

   [Fig. 4] présente un dispositif adapté à mettre en œuvre la divulgation.

### Description des modes de réalisation

Le procédé d'allocation de ressources d'une infrastructure de réseau (ex. d'un opérateur) pour l'instanciation de fonctions virtualisées sur des serveurs peut être mis en œuvre selon plusieurs modes de réalisation.

Dans la suite de la description, il est présenté plusieurs modes de réalisations non limitatifs.

La Figure 1 présente un premier mode de réalisation.

Dans ce mode de réalisation, un orchestrateur de ressources 102 est configuré pour recevoir d'un serveur 101 (ex. géré par un opérateur) une requête 107 d'instanciation de fonctions virtualisées sur des serveurs 104 : cette requête 107 d'instanciation peut correspondre à des SLA d'un client.

Les SLA (pour « service level agreement » en anglais) sont le plus souvent utilisées par un opérateur afin de mettre en œuvre l'infrastructure nécessaire au besoin du client.

Les SLA sont également utilisées pour déterminer une mise à jour à effectuer sur le réseau pour permettre une connectivité entre lesdits serveurs 104.

Une fois la requête 107 d'instanciation reçue, une demande 110 de mise à jour du réseau est émise à destination d'un gestionnaire 103 de ressources réseau (ex. SDNC pour « Software Defined Network Controller » en anglais) par l'orchestrateur de ressources 102.

Cette demande 110 de mise à jour du réseau vise à obtenir de la part du gestionnaire de ressources réseau une cartographie sommaire ou détaillée de l'infrastructure réseau qui serait sollicitée pour répondre à la demande du client. Ainsi, cette demande peut comprendre des indications géographiques basiques (ex. France, si la demande du client vise à délivrer un service en France ou ex. réseau 4G européen si le service visé par le client ne vise que les utilisateurs de données mobiles).

Une fois cette demande 110 adressée, le gestionnaire 103 de ressources réseau (ex. SDNC) fournit dans un message 112 (et à destination de l'orchestrateur de ressources) l'état du réseau demandé.

Par exemple, cet état peut comprendre la liste des liens réseau dont la bande passante utilisée est inférieure à 50%, la liste des liens réseau satisfaisant une latence prédéterminée, etc.

Le message peut tout à fait contenir une information binaire (ex. 0 si le réseau est prêt ou 1 si le réseau ne peut satisfaire la demande).

Si le réseau est prêt à satisfaire la demande 107, l'orchestrateur de ressources détermine les serveurs à allouer 108 et émet alors une demande 111 d'allocation de moyens informatiques sur des serveurs 104 déterminés.

Par ailleurs, si l'état du réseau reçu par le message 112 indique que certaines parties de l'infrastructure réseau ne permet pas de satisfaire la demande 107 (ex. les débits sur certains liens sont trop limités), il est possible d'identifier préalablement des serveurs (ex. connectés à ces liens ayant un débit limité) qu'il ne faut pas allouer. En effet, l'orchestrateur 102 peut prendre en compte l'état du réseau pour interdire la sélection de certains serveurs ou tout du moins leur affecter un « poids » afin de diminuer le risque de sélection de ces serveurs.

Ce mode de réalisation peut comprendre optionnellement une étape d'acquittement 109 confirmant l'allocation de moyens informatiques sur les serveurs déterminés.

Le gestionnaire de ressources émet ensuite une demande 113 de configuration à destination de ressources 105 de l'infrastructure réseau permettant la connectivité entre lesdits serveurs déterminés. Cette demande peut être ou non relayée par le serveur 103.

Ce message 113 peut ainsi comprendre une liste des serveurs 104 déterminés afin qu'il soit déterminé la meilleure liste de ressources 105 de l'infrastructure réseau à configurer (ex. les liens réseaux entre les serveurs déterminés). Les ressources 105 de l'infrastructure réseau à configurer peuvent être déterminées grâce un algorithme de routage, basé par exemple sur un algorithme de Dijkstra.

Optionnellement, le gestionnaire peut également émettre une demande 114 d'utilisation et/ou de configuration à un terminal client 106, fixe ou mobile. En effet, il peut être utile d'indiquer à ce terminal client 106 les différents serveurs et les différentes ressources de l'infrastructure qui devront être sollicités si ce terminal client 106 souhaite utiliser le service proposé (ex. si la demande d'allocation 107 vise un service de vidéosurveillance, le terminal client 106 peut devoir être configuré afin d'être en mesure de se connecter à la vidéo proposée par ce service de vidéosurveillance).

Une étape d'acquittement 115 de la configuration des ressources déterminées peut être prévue.

Par ailleurs, dans un mode de réalisation particulier, le procédé proposé peut également comprendre des tests de l'état des serveurs après allocation et de l'état du gestionnaire de ressources (non représenté sur la Figure 1).

Ce mode de réalisation peut comprendre une étape d'émission d'un message 116 d'acquittement en provenance de l'orchestrateur de ressources 102 et à destination du serveur 101 afin de lui indiquer que sa demande 107 a bien été prise en compte.

Dans le mode de réalisation général décrit en Figure 1, l'orchestrateur de ressources peut analyser de l'état du réseau et, en fonction de cet état, décider d'une allocation pertinente des serveurs. Cette analyse de l'état du réseau permet d'optimiser et d'adapter l'allocation de moyens informatiques sur les serveurs aux besoins du client de manière fine.

Dans ce premier mode de réalisation, l'orchestrateur de ressources peut exécuter des tâches complexes, comme l'analyse de l'état du réseau et décider, en fonction de l'état du réseau, de la manière dont les serveurs sont à allouer. Cela permet d'optimiser et d'adapter l'allocation de moyens informatiques sur les serveurs aux besoins du client en termes de débit, latence etc.

Le deuxième mode de réalisation, décrit ci-après, propose un procédé d'allocation de moyens informatiques sur des serveurs sans étape de vérification de l'état du réseau. Dans ce mode de réalisation, un orchestrateur moins complexe que dans le premier mode de réalisation est possible ce qui réduit la durée du procédé d'instanciation de fonctions virtualisées.

La Figure 2 présente un deuxième mode de réalisation.

Dans ce mode de réalisation, un orchestrateur de ressources 202 est configuré pour recevoir d'un serveur 201 une requête d'instanciation de fonctions virtualisées : cette requête 207 d'instanciation peut correspondre à une demande de qualité de service (ou SLA) d'un client.

Une fois la requête 207 d'instanciation reçue, il est déterminé (étape 208) des serveurs 204 à allouer en fonction de la requête 207 d'instanciation desdites fonctions virtualisées.

Une demande 210 d'allocation de moyens informatiques sur les serveurs déterminés est alors émise par l'orchestrateur de ressources 202.

Cette demande d'allocation vise à préparer des serveurs pour répondre à la demande du client. Ce mode de réalisation peut comprendre optionnellement une étape d'acquittement 212 confirmant l'allocation de moyens informatiques sur les serveurs déterminés.

Il est également possible de prévoir l'émission d'une demande 211 de configuration du réseau à destination d'un gestionnaire de ressources 203 afin de permettre une connectivité entre les serveurs déterminés. Dès lors, cette demande 211 peut comprendre une liste des serveurs déterminés.

Sur la base de cette liste de serveurs transmise et ayant une connaissance de l'infrastructure réseau, le gestionnaire de ressources peut déterminer les ressources réseau à solliciter afin de permettre la connectivité optimale des serveurs déterminés. Bien entendu, il est possible que cette dernière détermination soit effectuée directement par l'orchestrateur 202 s'il a à sa disposition certaines informations (ex. topologiques) du réseau. Néanmoins, il est possible que le gestionnaire de ressources dispose d'informations plus précises quant à l'état du réseau que l'orchestrateur (qui n'aurait que des informations statiques, comme la carte du réseau).

Par ailleurs le message 211 de configuration peut comporter certaines informations du message 207 et ainsi porter des indications quant au niveau de service demandé par le client. Dans cette situation, le gestionnaire de ressources peut déterminer les ressources réseau à configurer afin d'atteindre ce niveau de service (i.e. non nécessairement permettant la connectivité optimale).

Dans certaines situations, il est possible que le gestionnaire de ressources ne puisse pas trouver de solution pour satisfaire le niveau de service demandé par le client (ou tout simplement pour assurer une connectivité, même faible entre les serveurs). Dans cette hypothèse, il est possible de prévoir un message d'alerte envoyé par le gestionnaire de ressources vers l'orchestrateur afin que ce dernier propose de nouveaux serveurs. Le processus est alors réitéré.

Néanmoins, si des ressources réseau sont déterminées (i.e. une solution est trouvée afin d'assurer la connectivité), le gestionnaire de ressources peut émettre une demande de configuration 209 à destination des ressources déterminées 205 de l'infrastructure réseau et permettant la connectivité entre lesdits serveurs déterminés.

Le procédé peut comprendre optionnellement une étape d'acquittement 214 confirmant la configuration des ressources déterminées 205.

Il est également possible d'avoir un message 213 à destination de terminaux à l'image du message 114 décrite en relation avec la figure 1.

Une étape d'acquittement 215 de la configuration des ressources déterminées peut être prévue et un message peut alors être envoyé par le gestionnaire de ressources vers l'orchestrateur.

En outre, dans un mode de réalisation particulier, le procédé proposé peut également comprendre des tests de l'état des serveurs après allocation et de l'état du gestionnaire de ressources (non représenté sur la Figure 2).

Ce mode de réalisation peut comprendre une étape d'émission d'un message 216 d'acquittement en provenance de l'orchestrateur de ressources 202 et à destination du serveur 201 afin de lui indiquer que sa demande 207 a bien été prise en compte.

Ces modes de réalisation ne sont pas limitatifs, mais ne présentent seulement des exemples pour expliquer la divulgation.

La Figure 3 représente un ordinogramme du procédé qui décrit les modes de réalisation présentés.

L'orchestrateur de ressources est configuré pour recevoir une requête 107, 207 d'instanciation de fonctions virtualisées sur des serveurs.

Selon le premier mode de réalisation proposé (Mod1), l'orchestrateur est configuré pour recevoir un message 112 en provenance du gestionnaire de ressources contenant l'état du réseau. Ce message peut être reçu suite à une demande 110 de l'état du réseau par l'orchestrateur de ressources. Dans un autre mode de réalisation, ce message 112 est envoyé à une certaine fréquence en provenance du gestionnaire et à destination de l'orchestrateur.

En fonction du message 112 (et optionnellement le message 107, 207), il est possible de déterminer (étape 301) certaines configurations/allocations interdites ou non privilégiées pour l'allocation. Par exemple, si la demande du client est d'instancier un service nécessitant une très faible latence, il est possible d'exclure/filtrer (ou de pondérer négativement) les serveurs ne pouvant pas être connectées par des liens de faible latence. De même, si la demande du client est d'avoir un débit important pour son service, il est possible d'exclure/filtrer (ou de pondérer négativement) les serveurs connectés par des liens saturés ou n'ayant une technologie permettant un tel débit. En complément, si la demande du client est d'avoir une sécurité importante des flux, il est possible d'exclure/filtrer (ou de pondérer négativement) les liens n'ayant pas des routeurs supportant la gestion des VLAN ou la gestion de table d'exclusion (ou pare-feu)

En fonction du message 112 (et éventuellement en fonction du filtre / de la pondération effectué à l'étape 301), l'orchestrateur peut déterminer (étapes 108, 208) les serveurs à allouer et les ressources de l'infrastructure réseau à configurer.

Cette détermination peut se faire simultanément (i.e. les serveurs et les ressources sont déterminés en même temps, par exemple par la résolution d'un problème d'optimisation ayant pour variables serveurs et ressources) ou séquentiellement (i.e. les serveurs sont déterminées préalablement, par exemple par la résolution d'un problème d'optimisation ayant pour variables les serveurs, les ressources sont ensuite déterminées, par exemple par la résolution d'un problème d'optimisation ayant pour variables les ressources et comme contrainte les serveurs déterminés).

Selon le deuxième mode de réalisation (Mod2), l'orchestrateur est configuré pour déterminer (étape 208) les serveurs à allouer puis les ressources de l'infrastructure réseau à configurer, sans nécessiter l'exécution des étapes 112 et 301.

Suite à l'étape de détermination (étape 108 ou 208), les serveurs sont alloués (messages 111, 210) et les ressources déterminées de l'infrastructure réseau sont configurées (messages 113, 209).

Il est à noter que l'ordre entre allocation de moyens informatiques sur les serveurs déterminés et configuration des ressources réseaux déterminées n'a pas d'importance : ces deux étapes peuvent être réalisées l'une après l'autre ou même en parallèle.

Des étapes d'acquittement peuvent également être prévues pour ces étapes d'allocation et de configuration.

Dans un mode de réalisation particulier, le procédé proposé peut également comprendre des tests de l'état des serveurs après allocation et de l'état du gestionnaire de ressources (non représenté sur la Figure 3).

Ce mode de réalisation peut comprendre une étape d'émission d'un message d'acquittement (messages 116, 216) en provenance de l'orchestrateur de ressources 102, 202 et à destination du serveur 101, 202 afin de lui indiquer que sa demande 107, 207 a bien été prise en compte.

La Figure 4 décrit un dispositif 400 apte à mettre en œuvre un orchestrateur de ressources. Dans ce mode de réalisation, le dispositif 400 comprend une mémoire 405 pour stocker des instructions permettant la mise en œuvre du procédé, les différents messages reçus, et des données temporaires pour réaliser les différentes étapes du procédé tel que décrit précédemment.

Le dispositif comporte en outre un circuit 404. Ce circuit peut être, par exemple :
- un processeur apte à interpréter des instructions sous la forme de programme informatique, ou
- une carte électronique dont les étapes du procédé de l'invention sont décrites dans le silicium, ou encore
- une puce électronique programmable comme une puce FPGA pour « Field-Programmable Gate Array » en anglais, comme un SOC pour « System On Chip » en anglais ou comme un ASIC pour « Application Specific Integrated Circuit » an anglais.

Les SOC ou système sur puce sont des systèmes embarqués qui intègrent tous les composants d'un système électronique dans une puce unique.

Un ASIC est un circuit électronique spécialisé qui regroupe des fonctionnalités sur mesure pour une application donnée. Les ASIC sont généralement configurés lors de leur fabrication et ne peuvent être que simulés par l'utilisateur.

Les circuits logiques programmables de type FPGA Field-Programmable Gate Array sont des circuits électroniques reconfigurables par l'utilisateur.

Ce dispositif comporte une interface d'entrée 403 pour la réception de messages, et une interface de sortie 406 pour la fourniture de messages de configuration ou autres contrôlant les serveurs à instancier ou les ressources de l'infrastructure réseau à configurer 407. Enfin, l'ordinateur peut comporter, pour permettre une interaction aisée avec un utilisateur, un écran 401 et un clavier 402. Bien entendu, le clavier est facultatif, notamment dans le cadre d'un ordinateur ayant la forme d'un serveur, par exemple.

En fonction du mode de réalisation, le dispositif 400 peut être un ordinateur, un réseau d'ordinateurs, un composant électronique, ou un autre appareil comportant un processeur couplé de manière opérationnelle à une mémoire, ainsi que, selon le mode de réalisation choisi, une unité de stockage de données, et d'autres éléments matériels associés comme une interface de réseau et un lecteur de support pour lire un support de stockage amovible et écrire sur un tel support non représentés sur la figure. Le support de stockage amovible peut être, par exemple, un disque compact CD, un disque vidéo/polyvalent numérique DVD, un disque flash, une clé USB, etc.

En fonction du mode de réalisation, la mémoire, l'unité de stockage de données ou le support de stockage amovible contient des instructions qui, lorsqu'elles sont exécutées par le circuit de commande 404, amènent ce circuit de commande 404 à effectuer ou contrôler les interface d'entrée 403, interface de sortie 406, stockage de données dans la mémoire 405 et/ou traitement de données et des exemples de mise en œuvre du procédé proposé décrits dans les présentes.

Le circuit de commande 404 peut être un composant implémentant le contrôle des unités 403, 405 et 406 du dispositif 400.

En outre, le dispositif 400 peut être mis en œuvre sous forme logicielle, auquel cas il prend la forme d'un programme exécutable par un processeur, ou sous forme matérielle ou « hardware », comme un circuit intégré spécifique application ASIC, un système sur puce SOC, ou sous forme d'une combinaison d'éléments matériels et logiciels, par exemple un programme logiciel destiné à être chargé et exécuté sur un composant électronique décrit ci-avant ex. FPGA, processeur.

Le dispositif 400 peut également utiliser des architectures hybrides, par exemple des architectures basées sur un CPU+FPGA, un GPU *Graphics Processing Unit* ou un MPPA *Multi-Purpose Processor Array.*

Par ailleurs, le schéma fonctionnel présenté sur la figure 3 est un exemple typique d'un programme dont certaines instructions peuvent être réalisées auprès du dispositif décrit. À ce titre, la figure 3 peut correspondre à l'organigramme de l'algorithme général d'un programme informatique au sens de l'invention.

Dans un mode de réalisation, le gestionnaire de ressources peut être mis en œuvre par un SDNC ou « Software Defined Network Controller » en anglais.

Dans un mode de réalisation, l'orchestrateur peut être mis en place par Kubernetes, qui est une plate-forme permettant d'automatiser l'instanciation de fonctions virtualisées.

La présente invention trouve de nombreuses applications, notamment dans l'Internet des objets (« IoT - Internet of Things » en anglais). L'internet des objets permet l'interconnexion entre Internet et des objets, les lieux et des environnements physiques.

Par exemple, dans la vidéosurveillance d'un local, il peut être utile d'indiquer à un terminal client les différentes serveurs et les différentes ressources de l'infrastructure qui devront être sollicités si ce terminal client souhaite utiliser le service proposé. Le terminal client peut devoir être configuré afin d'être en mesure de se connecter à la vidéo proposée par ce service de vidéosurveillance. La récupération d'images pour un traitement informatique de façon centralisée (ex. en « temps réel ») peut être mise en œuvre par un choix des serveurs proches du client ce qui minimise la latence. De plus, une connexion directe à une agence d'assurance ou l'envoi d'un message d'alerte à la police peuvent être envisagés.

Dans un autre exemple, un véhicule connecté grâce à l'Internet des objets permet aux constructeurs et fournisseurs de l'automobile de développer de nouveaux services. Par exemple, la géolocalisation à distance et la récupération des véhicules volés peut être déployée grâce à des boîtiers connectés. La récupération des données du véhicule, comme l'usure des freins, par un fournisseur peut être utile pour alerter le client et pour prendre rendez-vous automatiquement dans un garage. La présente invention permet de configurer des serveurs attribués aux constructeurs dynamiquement en fonction de la localisation de leur flotte cliente, aux fournisseurs et au garage, lire et traiter les informations acquises en « temps réel » et de prendre rendez-vous à un garage géographiquement proche.

Dans un autre exemple, la présente divulgation permet, dans le cadre d'un service VPN client, une meilleure connectivité. Par exemple, si une personne souhaite proposer un service de VPN (ou « Virtual Private Network ») à des clients, il est possible d'allouer des ressources informatiques proche des clients et proche des sorties du réseau (e.g. soit un serveur Web ou un point d'interconnexion avec un autre réseau) et de s'assurer que les différents liens reliant me client et la sortie du réseau possèdent les bonnes caractéristiques (ex. latence, débit, sécurité, etc.).

## Revendications

1. Procédé d'allocation de ressources d'une infrastructure réseau pour la fourniture d'un service de télécommunication,
dans lequel le procédé comprend :
- réception (107, 207), par un orchestrateur de ressources (102, 202), d'une requête d'instanciation de fonctions virtualisées sur des serveurs;
- détermination (108, 208) de serveurs à allouer (104, 204) et de ressources de l'infrastructure réseau permettant la connectivité entre lesdits serveurs en fonction de la requête d'instanciation (107, 207) ;
- émission à destination des ressources déterminées d'une demande de configuration (113, 211 permettant la connectivité entre lesdits serveurs déterminés (104, 204) ;
- émission à destination des serveurs déterminés d'une demande d'allocation de moyens informatiques sur lesdits serveurs déterminés (111, 210).

2. Procédé selon la revendication 1 comprenant en outre :
- émission d'une demande de configuration (110) à destination d'un gestionnaire de ressources de l'infrastructure réseau (103) ;
dans lequel l'émission à destination des ressources déterminées de l'infrastructure réseau d'une demande de configuration (113) est fonction de ladite demande de configuration à destination d'un gestionnaire de ressources de l'infrastructure réseau.

3. Procédé selon la revendication 1, dans lequel la détermination (208) de serveurs à allouer et de ressources de l'infrastructure réseau permettant la connectivité entre lesdits serveurs en fonction de la requête d'instanciation desdites fonctions virtualisées comprend, dans l'ordre :
- détermination de serveurs (204) à allouer et
- détermination de ressources de l'infrastructure réseau (205) permettant la connectivité entre lesdits serveurs déterminés en fonction de la requête d'instanciation desdites fonctions virtualisées.

4. Procédé selon la revendication 1 ou 2, dans lequel la détermination de serveurs à allouer et de ressources de l'infrastructure réseau permettant la connectivité entre lesdits serveurs en fonction de la requête d'instanciation desdites fonctions virtualisées comprend, dans l'ordre :
- réception (112) d'un état de l'infrastructure réseau par l'orchestrateur de ressources ;
- détermination (108) de serveurs à allouer en fonction de l'état de l'infrastructure réseau reçue, l'état de l'infrastructure réseau permettant la connectivité entre lesdits serveurs en fonction de la requête d'instanciation desdites fonctions virtualisées, et
- détermination de ressources de l'infrastructure réseau permettant ladite connectivité.

5. Procédé selon l'une des revendications précédentes, dans lequel au moins une des ressources déterminées de l'infrastructure réseau d'une demande de configuration est un pare-feu ou un routeur.

6. Procédé selon l'une des revendications précédentes, dans lequel au moins un des serveurs déterminés est un serveur de calcul ou un serveur de stockage de données ou un terminal utilisateur.

7. Procédé selon l'une des revendications précédentes, dans lequel l'état du réseau comprend des informations relatives à la charge de liens réseau ou à la charge de puissance de calcul ou des informations de connectivité entre les serveurs.

8. Procédé selon l'une des revendications précédentes, dans lequel la requête d'instanciation (107, 207) comprend une demande de disponibilité ou de puissance de calcul, de débit ou de latence.

9. Procédé selon l'une des revendications précédentes, dans lequel la connectivité est une information de bande passante, de latence, de niveau de sécurité ou de qualité de service.

10. Dispositif d'allocation de ressources d'une infrastructure réseau pour la fourniture d'un service de télécommunication,
dans lequel le dispositif comprend :
- une interface (403) pour la réception d'une requête (107, 207) d'instanciation de fonctions virtualisées ;
- un circuit (404) adapté pour la détermination (108, 208) de serveurs à allouer (104, 204) et de ressources de l'infrastructure réseau permettant la connectivité entre lesdits serveurs en fonction de la requête d'instanciation (107, 207) ;
- une interface (406) pour l'émission à destination des ressources déterminées d'une demande de configuration (113, 211) permettant la connectivité entre lesdits serveurs déterminés (104, 204) ;
- une interface (406) pour l'émission à destination des serveurs déterminés d'une demande d'allocation de moyens informatiques sur lesdits serveurs déterminés (111, 210).

11. Produit programme informatique comportant des instructions pour la mise en œuvre du procédé selon l'une des revendications 1 à 9, lorsque ce programme est exécuté par un processeur.

## Patentansprüche

1. Verfahren zur Zuweisung von Ressourcen einer Netzwerkinfrastruktur zur Bereitstellung eines Telekommunikationsdienstes,
wobei das Verfahren umfasst:
- Empfangen (107, 207), durch einen Ressourcen-Orchestrator (102, 202), einer Anfrage zur Instanziierung von virtualisierten Funktionen auf Servern;
- Bestimmen (108, 208) von zuzuweisenden Servern (104, 204) und von Ressourcen der Netzwerkinfrastruktur, die die Konnektivität zwischen den Servern ermöglichen, in Abhängigkeit von der Anfrage zur Instanziierung (107, 207);
- Senden, an die bestimmten Ressourcen, einer Konfigurationsanforderung (113, 211), die die Konnektivität zwischen den bestimmten Servern (104, 204) ermöglicht;
- Senden, an die bestimmten Server, einer Anforderung zur Zuweisung von Computermitteln auf den bestimmten Servern (111, 210).

2. Verfahren nach Anspruch 1, umfassend ferner:
- Senden einer Konfigurationsanforderung (110) an einen Ressourcenmanager der Netzwerkinfrastruktur (103);
wobei das Senden einer Konfigurationsanforderung (113) an die bestimmten Ressourcen der Netzwerkinfrastruktur von der Konfigurationsanforderung an einen Ressourcenmanager der Netzwerkinfrastruktur abhängig ist.

3. Verfahren nach Anspruch 1, wobei das Bestimmen (208) von zuzuweisenden Servern und von Ressourcen der Netzwerkinfrastruktur, die die Konnektivität zwischen den Servern ermöglichen, in Abhängigkeit von der Anfrage zur Instanziierung der virtualisierten Funktionen in der Reihenfolge umfasst:
- Bestimmen von zuzuweisenden Servern (204) und
- Bestimmen von Ressourcen der Netzwerkinfrastruktur (205), die die Konnektivität zwischen den bestimmten Servern ermöglichen, in Abhängigkeit von der Anfrage zur Instanziierung der virtualisierten Funktionen.

4. Verfahren nach Anspruch 1 oder 2, wobei das Bestimmen von zuzuweisenden Servern und von Ressourcen der Netzwerkinfrastruktur, die die Konnektivität zwischen den Servern ermöglichen, in Abhängigkeit von der Anfrage zur Instanziierung der virtualisierten Funktionen in der Reihenfolge umfasst:
- Empfangen (112) eines Status der Netzwerkinfrastruktur durch den Ressourcen-Orchestrator;
- Bestimmen (108) von zuzuweisenden Servern in Abhängigkeit von dem empfangenen Status der Netzwerkinfrastruktur, wobei der Status der Netzwerkinfrastruktur die Konnektivität zwischen den Servern in Abhängigkeit von der Anfrage zur Instanziierung der virtualisierten Funktionen ermöglicht, und
- Bestimmen von Ressourcen der Netzwerkinfrastruktur, die die Konnektivität ermöglichen.

5. Verfahren nach einem der vorhergehenden Ansprüche, wobei mindestens eine der bestimmten Ressourcen der Netzwerkinfrastruktur einer Konfigurationsanforderung eine Firewall oder ein Router ist.

6. Verfahren nach einem der vorhergehenden Ansprüche, wobei mindestens einer der bestimmten Server ein Rechenserver oder ein Datenspeicherserver oder ein Benutzerendgerät ist.

7. Verfahren nach einem der vorhergehenden Ansprüche, wobei der Status des Netzwerks Informationen bezüglich der Auslastung von Netzwerkverbindungen oder der Rechenleistungsauslastung oder Informationen zur Konnektivität zwischen den Servern umfasst.

8. Verfahren nach einem der vorhergehenden Ansprüche, wobei die Anfrage zur Instanziierung (107, 207) eine Verfügbarkeits- oder Rechenleistungs-, Übertragungsrate- oder Latenzanforderung umfasst.

9. Verfahren nach einem der vorhergehenden Ansprüche, wobei die Konnektivität eine Bandbreiten-, Latenz-, Sicherheitsniveau- oder Dienstgüteinformation ist.

10. Vorrichtung zur Zuweisung von Ressourcen einer Netzwerkinfrastruktur zur Bereitstellung eines Telekommunikationsdienstes,
wobei die Vorrichtung umfasst:
- eine Schnittstelle (403) zum Empfangen einer Anfrage (107, 207) zur Instanziierung von virtualisierten Funktionen;
- eine Schaltung (404), die angepasst ist zum Bestimmen (108, 208) von zuzuweisenden Servern (104, 204) und von Ressourcen der Netzwerkinfrastruktur, die die Konnektivität zwischen den Servern ermöglichen, in Abhängigkeit von der Anfrage zur Instanziierung (107, 207);
- eine Schnittstelle (406) zum Senden, an die bestimmten Ressourcen, einer Konfigurationsanforderung (113,211), die die Konnektivität zwischen den bestimmten Servern (104, 204) ermöglicht;
- eine Schnittstelle (406) zum Senden, an die bestimmten Server, einer Anforderung zur Zuweisung von Computermitteln auf den bestimmten Servern (111, 210).

11. Computerprogrammprodukt, das Anweisungen beinhaltet, die bei der Ausführung dieses Programms durch einen Prozessor das Verfahren nach einem der Ansprüche 1 bis 9 ausführen.

## Claims

1. Method for allocating resources of a network infrastructure for the provision of a telecommunications service,
wherein the method comprises:
- receiving (107, 207), by a resource orchestrator (102, 202), a request to instantiate virtualized functions on servers;
- determining (108, 208) servers to be allocated (104, 204) and resources of the network infrastructure enabling connectivity between said servers on the basis of the instantiation request (107, 207);
- sending, to the determined resources, a configuration request (113, 211) enabling connectivity between said determined servers (104, 204);
- sending, to the determined servers, a request to allocate computing means on said determined servers (111, 210).

2. Method according to Claim 1, furthermore comprising:
- sending a configuration request (110) to a resource manager of the network infrastructure (103);
wherein the sending of a configuration request (113) to the determined resources of the network infrastructure is dependent on said configuration request made to a resource manager of the network infrastructure.

3. Method according to Claim 1, wherein determining (208) servers to be allocated and resources of the network infrastructure enabling connectivity between said servers on the basis of the request to instantiate said virtualized functions comprises, in the following order:
- determining servers (204) to be allocated and
- determining resources of the network infrastructure (205) enabling connectivity between said determined servers on the basis of the request to instantiate said virtualized functions.

4. Method according to Claim 1 or 2, wherein determining servers to be allocated and resources of the network infrastructure enabling connectivity between said servers on the basis of the request to instantiate said virtualized functions comprises, in the following order:
- receiving (112), by the resource orchestrator, a status of the network infrastructure;
- determining (108) servers to be allocated on the basis of the received status of the network infrastructure, the status of the network infrastructure enabling connectivity between said servers on the basis of the request to instantiate said virtualized functions, and
- determining resources of the network infrastructure enabling said connectivity.

5. Method according to one of the preceding claims, wherein at least one of the determined resources of the network infrastructure in a configuration request is a firewall or a router.

6. Method according to one of the preceding claims, wherein at least one of the determined servers is a computational server or a data storage server or a user terminal.

7. Method according to one of the preceding claims, wherein the status of the network comprises information relating to network link loading or computational power loading or information concerning connectivity between the servers.

8. Method according to one of the preceding claims, wherein the instantiation request (107, 207) comprises a request for availability or computational power, data rate or latency.

9. Method according to one of the preceding claims, wherein the connectivity is information concerning bandwidth, latency, security level or quality of service.

10. Device for allocating resources of a network infrastructure for the provision of a telecommunications service,
wherein the device comprises:
- an interface (403) for receiving a request (107, 207) to instantiate virtualized functions;
- a circuit (404) designed to determine (108, 208) servers to be allocated (104, 204) and resources of the network infrastructure enabling connectivity between said servers on the basis of the instantiation request (107, 207);
- an interface (406) for sending, to the determined resources, a configuration request (113, 211) enabling connectivity between said determined servers (104, 204);
- an interface (406) for sending, to the determined servers, a request to allocate computing means on said determined servers (111, 210).

11. Computer program product comprising instructions for implementing the method according to one of Claims 1 to 9 when this program is executed by a processor.
